# DEMANDE DE BREVET EUROPEEN

(11) **EP 4 475 106 A1**
(43) Date de publication de la demande: **11.12.2024**
(21) Numéro de dépôt: 24180019.2
(22) Date de dépôt: 04.06.2024
(51) Int. Cl.: G08G 1/16, G06V 20/59, B60W 30/12, G06V 20/56

(54) **PROCÉDÉ D'ASSISTANCE À LA CONDUITE, MIS EN OUVRE PAR UN SYSTÈME DE GESTION EMBARQUÉ DANS UN VÉHICULE AUTOMOBILE**

(30) Priorité: 05.06.2023 FR 2305602
(71) Demandeur: Ampere SAS, 92100 Boulogne-Billancourt (FR)
(72) Inventeur: GIACCONE, Thierry, 31100 Toulouse (FR)
(74) Mandataire: Renault Group

(57) **Abrégé**

Procédé d'assistance à la conduite, mis en oeuvre par un système de gestion embarqué dans un véhicule automobile, ledit procédé comprenant une étape (10) de détection d'un changement de voie dudit véhicule, délivrant une information (12) de changement de voie, une étape (16) de contrôle d'une activation d'un avertisseur de changement de voie dudit véhicule, délivrant une information (18) d'activation dudit avertisseur, et une étape (22) de détermination d'une habilitation à emprunter une voie réservée, délivrant une information (24) d'autorisation, ledit procédé comprenant en outre une étape (28) d'activation de premières contre-mesure en fonction desdites informations (12, 18, 22) de changement de voie, d'activation dudit avertisseur et d'autorisation, lesdites premières contre-mesures étant activées dans les cas suivant :
- ladite information (12) de changement de voie, est positive et, simultanément, ladite information (18) d'activation est négative,
- ladite information (12) de changement de voie est positive et, simultanément, ladite information (18) d'autorisation est négative.

## Description

L'invention concerne un procédé d'assistance à la conduite, mis en oeuvre par un système de gestion embarqué dans un véhicule automobile.

Dans ce domaine, il est connu des systèmes d'assistance visant à empêcher un changement de voie non désiré. Pour cela, quand un changement de voie est détecté alors que le conducteur n'a pas activé de clignotant, des mesures visant à attirer son attention sont appliquées telles qu'un signal sonore, des effets de vibrations et/ou un couple résistant au volant.

De telles mesures permettent d'éviter qu'un conducteur, par exemple en train de s'assoupir, perde le contrôle de sa trajectoire. Elles ne sont cependant pas adaptées à une situation où il faut pouvoir réagir même si le conducteur a bien activé son clignotant.

Or, dans le but de favoriser le trajet des voitures transportant plus d'une personne un nombre croissant de routes à plusieurs voies comprennent des voies réservées à certains véhicules tel que des véhicules de transport public ou des voitures faisant du covoiturage. Certains conducteurs peuvent cependant ne pas avoir pas remarqué cette limitation et emprunter de telles voies volontairement, en activant leur indicateur de changement de voie, sans pour autant être avertis de leur erreur.

Il existe de la sorte aujourd'hui un besoin d'un procédé d'assistance à la conduite permettant à un automobiliste d'éviter une telle situation et ceci en limitant les ressources à mettre en oeuvre en termes de moyens de traitement.

L'invention a pour objectif de pallier au moins en partie les inconvénients précédents et propose, selon un premier aspect, un procédé d'assistance à la conduite, mis en oeuvre par un système de gestion embarqué dans un véhicule automobile, ledit procédé comprenant une étape de détection d'un changement de voie dudit véhicule, délivrant une information de changement de voie, une étape de contrôle d'une activation d'un avertisseur de changement de voie dudit véhicule, délivrant une information d'activation dudit avertisseur, et une étape de détermination d'une habilitation à emprunter une voie réservée, délivrant une information d'autorisation, ledit procédé comprenant en outre une étape d'activation de premières contre-mesure en fonction desdites informations de changement de voie, d'activation dudit avertisseur et d'autorisation, lesdites premières contre-mesures étant activées dans les cas suivant:
- ladite information de changement de voie est positive et, simultanément, ladite information d'activation est négative,
- ladite information de changement de voie est positive et, simultanément, ladite information d'autorisation est négative.

Ainsi, grâce à l'invention, le risque d'utilisation de la voie réservée est limité grâce à l'activation de contre-mesure, et ceci sans nécessiter d'avoir recours à des moyens de traitement spécifiques car on utilise les mêmes contre mesure que celles employées dans le cas de changement de voies sans activation du clignotant. On limite de la sorte les ressources, matériels et/ou logiciels, à mettre en oeuvre.

Selon différentes caractéristiques supplémentaires de l'invention, qui pourront être prises ensemble ou séparément et qui forment autant de modes de réalisation de l'invention:
- ladite voie réservée est une voie voisine de la voie suivie par ledit véhicule,
- ledit procédé comprend une étape d'établissement d'un signal indicatif si ladite information de changement de voie est positive et, simultanément, ladite information d'autorisation est négative, ladite étape d'établissement du signal indicatif étant effectuée en parallèle de ladite étape d'activation des premières contre-mesure,
- ladite étape de détermination d'une habilitation à emprunter la voie réservée comprend une étape d'acquisition et de traitement de données, délivrant une information sur un nombre de passagers devant être présents dans le véhicule pour emprunter ladite voie réservée,
- ladite étape de détermination d'une habilitation à emprunter la voie réservée comprend une étape d'acquisition et de traitement de données de présence permettant de déterminer une information relative aux nombre de personnes se trouvant dans le véhicule,
- ladite étape de détermination d'une habilitation à emprunter la voie réservée comprend une étape de comparaison de ladite information sur un nombre de passagers devant être présents dans le véhicule pour emprunter ladite voie réservée et de ladite information relative aux nombre de personnes se trouvant dans le véhicule,
- ladite étape d'activation des premières contre-mesure comprend une étape de génération de premiers avertissements sensoriels,
- ladite étape de génération de premiers avertissements sensoriels comprend une étape de génération d'actions correctrices influant sur une trajectoire du véhicule,
- ladite étape de génération d'actions correctrices comprend une étape d'application d'un couple résistant sur un arbre de direction dudit véhicule et/ ou d'actionnement de freins différentiels agissant sur des roues du véhicule,
- ledit procédé comprend une étape de détection de la présence du véhicule sur la voie réservée, délivrant une information de forçage,
- ledit procédé comprend une étape d'activation de deuxièmes contre-mesure si ladite information de forçage est positive,
- ladite étape d'activation de deuxièmes contre-mesure comprend une temporisation entre un déclenchement successif desdites deuxièmes contre mesure, une suivante desdites deuxièmes contre-mesure présentant un effet dissuasif supérieur à une précédente desdites deuxième contre-mesure,
- lesdites deuxièmes contre-mesure sont successivement :
   - Un deuxième avertissement sensoriel du conducteur, éventuellement d'intensité croissante ;
   - Un repérage sonore et/ou visuelle dudit véhicule, visible de l'extérieur,
   - Un envoi d'un message d'infraction par un système de communication dudit véhicule,
- ledit procédé comprend une étape de détection de mesures d'évitement, délivrant une information d'évitement,
- ladite étape d'activation des premières contre mesure prend en outre en compte ladite information d'évitement, lesdites contre-mesure n'étant pas activées si l'information d'évitement est positive.

L'invention concerne aussi un système de gestion, destiné à être embarqué dans un véhicule automobile, ledit système de gestion comprenant des éléments matériels et/ou logiciels mettant en oeuvre le procédé d'assistance à la conduite décrit plus haut.

L'invention concerne encore un véhicule automobile comprenant ledit système de gestion.

L'invention concerne aussi un produit programme d'ordinateur comprenant des instructions de code de programme enregistrées sur un support lisible par ordinateur pour mettre en oeuvre les étapes du procédé d'assistance à la conduite décrit plus haut, lorsque ledit programme fonctionne sur un ordinateur.

L'invention concerne encore un support d'enregistrement de données, lisible par un ordinateur, sur lequel est enregistré un programme d'ordinateur comprenant des instructions de code de programme pour mettre en oeuvre les étapes du procédé d'assistance à la conduite décrit plus haut, lorsque ledit programme fonctionne sur un ordinateur.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
[Fig.1] illustre de façon schématique un exemple de route sur laquelle l'invention a vocation à s'appliquer ;
[Fig.2] illustre de façon schématique un exemple de panneau de signalisation donnant des indications sur les conditions d'utilisation d'une telle route ;
[Fig.3] illustre de façon schématique, sous la forme d'un logigramme, un exemple de mise en oeuvre d'un procédé conforme à l'invention ;
[Fig.4] illustre de façon schématique un exemple de réalisation d'étapes d'activation de premières contre mesure et d'établissement d'un signal indicatif selon le procédé de la [Fig.3] ;
[Fig.5] illustre de façon schématique un exemple de réalisation d'une étape de détermination d'une habilitation à emprunter une voie réservée selon le procédé de la [Fig.3] ;
[Fig.6] illustre de façon schématique un exemple de réalisation d'une étape d'activation de contre-mesure selon le procédé de la [Fig.3].

Selon un premier aspect, l'invention concerne un procédé d'assistance à la conduite, mis en oeuvre par un système de gestion embarqué dans un véhicule automobile notamment un système de gestion numérique de traitement d'informations comprenant des microprocesseurs.

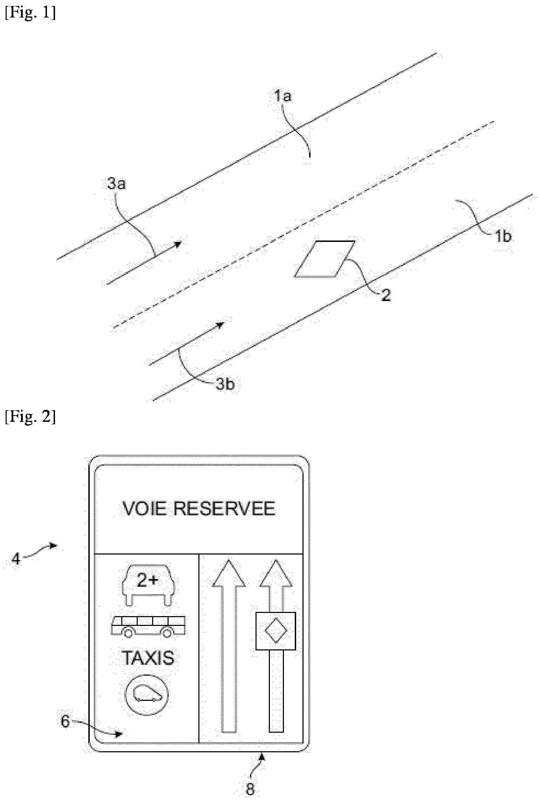

Comme illustré à la [Fig.1], ledit procédé a pour but de limiter un risque d'une présence sur une voie réservée d'un véhicule qui n'est pas habilité à circuler sur cette voie. Ici, une seule des chaussée de la route a été illustrée et elle comprend deux voies de circulation 1a, 1b, destinées à être empruntées dans le même sens, comme illustré par les flèches repérées 3a, 3b. La voie de gauche 1a est ouverte aux véhicules indépendamment de leur nombre d'occupants tandis que la voie de droite 1b, portant un pictogramme ou marquage au sol en forme de losange 2, est réservée aux véhicules comprenant un nombre d'occupants minimum, par exemple égale ou supérieur à deux. De telles dispositions permettent de favoriser le covoiturage en offrant aux véhicules qui le pratique une voie de circulation dans laquelle le trafic est fluidifié.

Comme illustré à la [Fig.2], de telles voies sont signalées, notamment, à l'aide d'un ou plusieurs panneaux routier 4. Ledit panneau 4 comprend, par exemple, une première partie 6 indiquant les types de véhicule autorisés à circuler sur la voie réservée, à savoir, ici, les véhicules comprenant deux occupants ou plus, les bus, les taxis ou les véhicules zéro émission. Il comprend encore, notamment, une deuxième partie 8 permettant d'identifier la ou lesquelles des voies de la chaussée sont réservées.

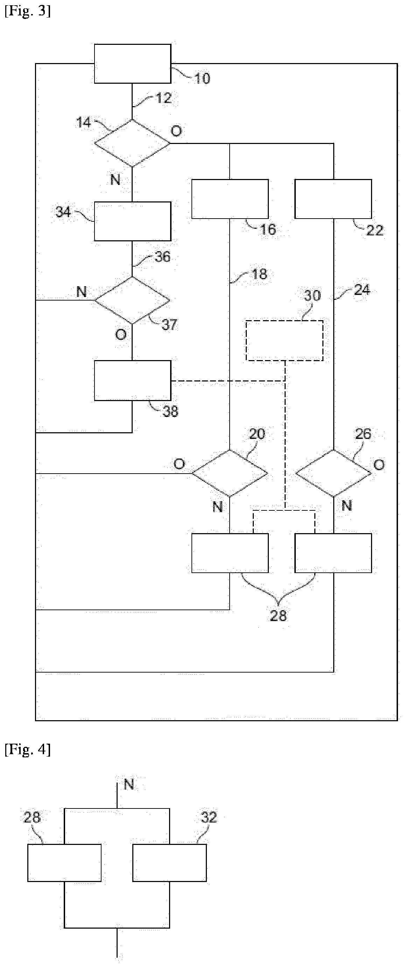

Comme illustré à la [Fig.3], ledit procédé comprenant une étape 10 de détection d'un changement de voie dudit véhicule. Elle est réalisée, par exemple, par mesure et analyse de différents paramètres permettant de déterminer un écart du véhicule par rapport à un axe central de la voie. Elle délivre une information 12 de changement de voie, notamment une information positive en cas de changement de voie et une information négative tant que le véhicule rester dans sa voie. Ici, la valeur de l'information de changement de voie est examinée au niveau d'une première étape de test 14, par exemple par ledit système de gestion numérique.

Ledit procédé comprend en outre une étape 16 de contrôle d'une activation d'un avertisseur de changement de voie dudit véhicule, notamment un clignotant. Elle délivre une information 18 d'activation dudit avertisseur, positive si le clignotant est activé en direction de la voie vers laquelle le véhicule se dirige et négative dans le cas contraire, à savoir si le clignotant n'est pas activé ou activé dans l'autre direction. Dans le mode de réalisation illustré, la valeur de l'information de changement de voie est examinée au niveau d'une deuxième étape de test 20, par exemple par ledit système de gestion numérique.

Ledit procédé comprend encore une étape 22 de détermination d'une habilitation à emprunter la voie réservée 1b. Ladite voie réservée 1b est préférentiellement une voie voisine de la voie 1a, sur la droite ou sur la gauche, suivie par ledit véhicule. Ladite étape 22 de détermination de l'habilitation à emprunter la voie réservée délivre une information d'autorisation 24. Ladite information d'autorisation est positive si le véhicule remplit les conditions pour emprunter ladite voie réservée 1b, négative sinon. Dans le mode de réalisation illustré, la valeur de l'information de changement de voie est examinée au niveau d'une troisième étape de test 26, par exemple par ledit système de gestion numérique.

Lesdites étapes 16, 22 de contrôle d'une activation d'un avertisseur de changement de voie dudit véhicule et/ou de détermination d'une habilitation à emprunter la voie réservée 1b sont effectuées, notamment en parallèle, si l'information 12 de changement de voie est positive.

Ledit procédé comprend encore une étape 28 d'activation de premières contre-mesure en fonction desdites informations 12, 18, 24 de changement de voie, d'activation dudit avertisseur et d'autorisation. Tel qu'il ressort du logigramme de la [Fig.3], ladite étape 28 d'activation des premières contre-mesure est réalisée dans les cas suivant:
- ladite information 12 de changement de voie est positive et, simultanément, ladite information 18 d'activation est négative, et ceci quelle que soit ladite information 24 d'autorisation,
- ladite information 12 de changement de voie est positive et, simultanément, ladite information 24 d'autorisation est négative, et ceci quelle que soit ladite information 18 d'activation.

Autrement dit, ladite étape 28 d'activation des premières contre-mesure est commune et identique dans les deux cas évoqués plus haut. Encore autrement dit, elle fait appel à des mêmes ressources 30, notamment en termes de logiciels et/ou de matériels, en particulier aux mêmes ressources du système de gestion numérique. Ainsi, selon cet aspect de l'invention, il n'est pas nécessaire de munir le véhicule, en particulier ledit système de gestion numérique, de ressources spécifiques pour effectuer des contre mesure en cas de changement de voie non autorisée. Ces dernières sont identiques et font appel aux mêmes ressources du véhicule que les contre-mesure prévues en cas de changement de voie non volontaire. On limite de la sorte le risque d'utilisation de la voie réservée 1b, ceci sans multiplier les moyens à mettre en oeuvre.

A titre d'exemple, ladite étape 28 d'activation des premières contre-mesure comprend une étape de génération de premiers avertissements sensoriels tels que des fonctions connues sous le nom de LDW (selon l'acronyme anglais « Lane Departure Warning) et/ou LKA (selon l'acronyme anglais « Lane Keep Assist »). Lesdites premières contre mesure sont configurées pour attirer l'attention du conducteur, notamment s'il est distrait et/ou en train de s'assoupir alors que son véhicule dévie, ou à le dissuader de prolonger sa manoeuvre, s'il est en train de se diriger vers la voie réservée 1b alors qu'il n'en n'a pas le droit.

Selon une première variante, il s'agit d'un signal sonore et/ou d'une vibration. Selon un autre variante, alternative ou cumulative, ladite étape de génération de premiers avertissements sensoriels comprend une étape de génération d'actions correctrices influant sur une trajectoire du véhicule. Il s'agit, par exemple, d'une application d'un couple résistant sur un arbre de direction dudit véhicule et/ou d'un actionnement d'un freinage différentiel agissant sur des roues du véhicule, ceci de sorte à recentrer le véhicule sur la voie qu'il occupe à moins que le conducteur agisse sur le volant pour forcer le changement de voie.

Dans ce dernier cas de figure, il est mis fin à l'application des premières contre mesure, après un délai prédéterminé, en se basant sur l'hypothèse que le changement de voie est alors volontaire et assumé par le conducteur. L'étape 10 de détection de changement de voie s'effectue alors à nouveau, ceci en tenant compte de la nouvelle voie occupée par le véhicule. Sur la [Fig.3], on constate qu'il en est d'ailleurs de même si l'information 18 d'activation et/ou si l'information 24 d'autorisation sont positives.

Comme illustré à la [Fig.4], ledit procédé comprend encore une étape 32 d'établissement d'un signal indicatif si ladite information de changement de voie est positive et, simultanément, ladite information d'autorisation est négative, autrement dit si les conditions pour l'activation des premières contre mesure sont remplies alors même que le conducteur a actionné son clignotant. En effet, dans un tel cas de figure, il existe un risque que le conducteur ne comprenne pas pourquoi de telles contre-mesure s'activent et qu'il interprète alors mal le message, ce qui pourrait entraîner des décisions de conduite inappropriées. Ledit signal indicatif est avantageusement un signal visuel, par exemple au tableau de bord, dans un format propre à attirer l'attention du conducteur, notamment par sa couleur et/ou son mode d'affichage. Alternativement ou cumulativement, il pourra s'agir d'une émission d'un signal sonore, en particulier si lesdites premières contre mesure ne sont pas déjà de cette nature. Ladite étape 32 d'établissement du signal indicatif est ici effectuée en parallèle et/ou simultanément à ladite étape 28 d'activation des premières contre-mesure, suite audit troisième test.

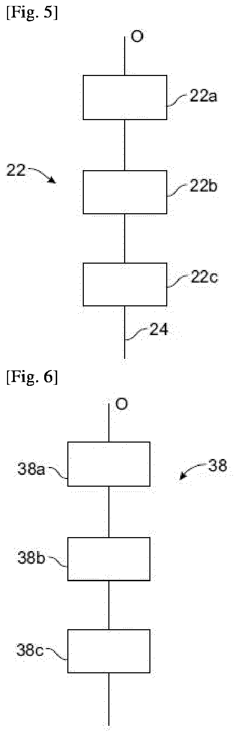

Comme illustré à la [Fig.5], ladite étape 22 de détermination d'une habilitation à emprunter la voie réservée 1b comprend une étape 22a d'acquisition et de traitement de données relatives à ladite voie réservée, délivrant une information sur un nombre de passagers devant être présents dans le véhicule pour emprunter ladite voie réservée. Ladite étape 22a d'acquisition et de traitement de données relatives à ladite voie réservée permet ainsi de qualifier la voie réservée 1b. Elle est également configurée pour déterminer si ladite voie réservée est à droite ou à gauche de la voie suivie par le véhicule.

Ladite étape 22a d'acquisition et de traitement de données relatives à ladite voie réservée fait appel, par exemple, à du traitement d'images, par exemple en vue de détecter et interpréter les pictogrammes ou marques au sol 2 et/ou les panneaux 4 présents le long des voies, ceci à l'aide de caméras embarquées dans le véhicule. Ladite étape 22a d'acquisition et de traitement de données relatives à ladite voie réservée fait encore appel, alternativement ou cumulativement, à des informations d'une cartographie routière couplées à des informations de positionnement du véhicule. Dans l'exemple illustré aux figures, ladite étape 22a d'acquisition et de traitement de données relatives à ladite voie réservée délivre l'information selon laquelle le nombre d'occupants du véhicule doit être supérieur ou égal à deux.

Ladite étape 22a d'acquisition et de traitement de données relatives à ladite voie réservée est préférentiellement configurée pour tenir compte d'une information horaire afin d'adapter l'information délivrée si le nombre d'occupant minimum devant être présent dans le véhicule pour emprunter la voie réservée 1b dépend d'une information de temps tel que la date, le jour et/ou l'heure.

Ladite étape 22 de détermination d'une habilitation à emprunter la voie réservée comprend en outre une étape 22b d'acquisition et de traitement de données de présence permettant de déterminer une information relative aux nombre de personnes se trouvant dans le véhicule. Ladite étape 22b d'acquisition et de traitement de données de présence fait appel, par exemple, à des informations également exploitées par d'autres fonctions du véhicule telles que des fonctions d'émission d'alerte en cas de ceinture de sécurité non bouclées. Ladite étape 22b d'acquisition et de traitement de données de présence exploitent, notamment, des informations provenant de capteurs de masse présents dans des sièges du véhicule, couplés à des contacteurs configurés pour détecte un bouclage de ceintures de sécurité associés auxdits sièges, d'une analyse d'images d'une ou plusieurs caméras orientées vers l'intérieur du véhicule, notamment une caméra placée sous un rétroviseur intérieur, et/ou de capteurs sonores couplés à un algorithme de filtration spatiale capable de déterminer plusieurs positions d'émission de sources sonores. Ladite étape 22b d'acquisition et de traitement de données de présence est effectuée, par exemple, à chaque démarrage du véhicule et/ou à chaque ouverture/fermeture d'une portière du véhicule, l'information obtenue sur le nombre de passagers présents étant alors mémorisée.

Ladite étape 22 de détermination d'une habilitation à emprunter la voie réservée comprend encore une étape 22c de comparaison de ladite information sur un nombre de passagers devant être présents dans le véhicule pour emprunter ladite voie réservée 1b et de ladite information relative aux nombre de personnes se trouvant dans le véhicule. Ladite étape 22c délivre de la sorte ladite information 24 d'autorisation, négative ou positive.

En se reportant de nouveau [Fig.3], on constate que ledit procédé comprend avantageusement une étape 34 de détection de la présence du véhicule sur la voie réservée 1b. Elle délivre une information 36 de forçage. Ladite information d'autorisation est positive si le véhicule ne remplit pas les conditions pour emprunter ladite voie réservée 1b, négative sinon. Dans le mode de réalisation illustré, la valeur de l'information 36 de forçage est examinée au niveau d'une quatrième étape de test 37, par exemple par ledit système de gestion numérique. Outre une information sur la voie empruntée par le véhicule, ladite étape 34 de détection de la présence du véhicule sur la voie réservée 1b exploite avantageusement l'information 24 d'autorisation qui aura été mémorisée ou acquise indépendamment de la réalisation de l'étape 22 de détermination d'une habilitation à emprunter la voie réservée 1b en cause.

Dans ce mode de réalisation, ledit procédé comprend en outre une étape 38 d'activation de deuxièmes contre-mesure si ladite information 36 de forçage est positive. A l'inverse, si l'information de forçage est négative, l'étape 10 de détection de changement de voie s'effectue alors à nouveau. Il en est d'ailleurs de même après l'exécution des deuxième contre mesure.

Comme illustré à la [Fig.6], ladite étape 38 d'activation de deuxièmes contre-mesure comprend une temporisation entre un déclenchement successif desdites deuxièmes contre mesure, une suivante desdites deuxièmes contre-mesure présentant un effet dissuasif supérieur à une précédente desdites deuxième contre-mesure. A titre d'exemple, lesdites deuxièmes contre-mesure sont successivement obtenues à l'aide:
- d'une étape 38a d'émission d'un deuxième avertissement sensoriel du conducteur, notamment une image et/ou un son, éventuellement d'intensité croissante,
- d'une étape 38b d'émission d'un repérage sonore et/ou visuelle dudit véhicule, visible de l'extérieur, par exemple l'activation de feux d'éclairage,
- d'une étape 38c d'émission d'un message d'infraction par un système de communication dudit véhicule, par exemple transmis à un serveur prévu à cet effet.

Lesdites deuxièmes contre mesure ont pour objet d'encourager le conducteur à libérer le plus vite possible la voie réservée 1b s'il ne remplit pas les conditions pour l'utiliser.

Selon un mode de mise oeuvre de l'invention, non illustré, ledit procédé comprend une étape de détection de mesures d'évitement, délivrant une information d'évitement. Il s'agit, par exemple, d'une information relative à la présence d'un obstacle, tel qu'un objet, un véhicule arrêté et/ou une déformation de la chaussée, sur la voie empruntée par le véhicule.

Ladite étape 28 d'activation des premières contre mesure prend alors avantageusement en compte ladite information d'évitement. Plus précisément, lesdites premières contre-mesure ne sont pas activées si l'information d'évitement est positive, c'est-à-dire, en cas de présence d'obstacles. En effet, dans un tel cas, l'utilisation de la voie réservée 1b parait légitime, pour des raisons de sécurité, même si le véhicule ne remplit pas les conditions fixées pour l'emprunter. Les secondes contre mesure pourront cependant s'appliquer si le véhicule demeure sur la voie réservée 1b au-delà d'un certain temps, une fois que lesdites informations d'évitement seront devenues négatives, c'est-à-dire, une fois le ou les obstacles disparus.

Selon une variante de l'invention, une activation desdites première et/ou deuxième contre mesure est enregistrée.

Il est à noter que, selon un deuxième aspect de l'invention, celle-ci concerne encore un procédé d'assistance à la conduite permettant l'émission de premières contre mesure visant à maintenir le véhicule au centre de sa voie s'il ne remplit pas les conditions pour emprunter une voie réservée voisine, que ces première contre mesure soient exécutées ou non avec des ressources différentes de celles employées dans des fonctions de guidage assisté.

L'invention concerne ainsi un procédé d'assistance à la conduite, mis en oeuvre par un système de gestion embarqué dans un véhicule automobile, ledit procédé comprenant une étape de détection d'un changement de voie dudit véhicule, délivrant une information de changement de voie et une étape de détermination d'une habilitation à emprunter une voie réservée, délivrant une information d'autorisation, ledit procédé comprenant en outre une étape d'activation de premières contre-mesure en fonction desdites informations de changement de voie et d'autorisation, lesdites contre-mesures étant activées si ladite information de changement de voie est positive et, simultanément, ladite information d'autorisation est négative, ladite étape d'activation des premières contre-mesure comprenant une étape de génération d'actions correctrices influant sur une trajectoire du véhicule.

Les autres caractéristiques du premier aspect de l'invention restent applicables à ce deuxième aspect pour autant qu'elles soient techniquement compatibles.

## Revendications

1. Procédé d'assistance à la conduite, mis en oeuvre par un système de gestion embarqué dans un véhicule automobile, ledit procédé comprenant une étape (10) de détection d'un changement de voie dudit véhicule, délivrant une information (12) de changement de voie, une étape (16) de contrôle d'une activation d'un avertisseur de changement de voie dudit véhicule, délivrant une information (18) d'activation dudit avertisseur, et une étape (22) de détermination d'une habilitation à emprunter une voie réservée (1b), délivrant une information (24) d'autorisation, ledit procédé comprenant en outre une étape (28) d'activation de premières contre-mesure en fonction desdites informations (12, 18, 22) de changement de voie, d'activation dudit avertisseur et d'autorisation, lesdites premières contre-mesures étant activées dans les cas suivant :
- ladite information (12) de changement de voie, est positive et, simultanément, ladite information (18) d'activation est négative,
- ladite information (12) de changement de voie est positive et, simultanément, ladite information (18) d'autorisation est négative.

2. Procédé selon la revendication précédente comprenant une étape (32) d'établissement d'un signal indicatif si ladite information (12) de changement de voie est positive et, simultanément, ladite information (18) d'autorisation est négative, ladite étape (32) d'établissement du signal indicatif étant effectuée en parallèle de ladite étape (28) d'activation des premières contre-mesure.

3. Procédé selon l'une quelconque des revendication précédente dans lequel ladite étape (22) de détermination d'une habilitation à emprunter la voie réservée comprend une étape (22a) d'acquisition et de traitement de données, délivrant une information sur un nombre de passagers devant être présents dans le véhicule pour emprunter ladite voie réservée (1b), une étape (22b) d'acquisition et de traitement de données de présence, permettant de déterminer une information relative aux nombre de personnes se trouvant dans le véhicule, et/ou une étape (22c) de comparaison de ladite information sur un nombre de passagers devant être présents dans le véhicule pour emprunter ladite voie réservée et de ladite information relative aux nombre de personnes se trouvant dans le véhicule.

4. Procédé selon l'une quelconque des revendications précédentes dans lequel ladite étape d'activation des premières contre-mesure comprend une étape de génération de premiers avertissements sensoriels.

5. Procédé selon la revendication précédente dans lequel ladite étape de génération de premiers avertissements sensoriels comprend une étape de génération d'actions correctrices influant sur une trajectoire du véhicule.

6. Procédé selon la revendication précédente dans lequel ladite étape de génération d'actions correctrices comprend une étape d'application d'un couple résistant sur un arbre de direction dudit véhicule et/ou d'actionnement de freins différentiels agissant sur des roues du véhicule.

7. Procédé selon l'une quelconque des revendications précédentes comprenant une étape (34) de détection de la présence du véhicule sur la voie réservée, délivrant une information (36) de forçage et une étape (38) d'activation de deuxièmes contre-mesure si ladite information (36) de forçage est positive.

8. Procédé selon la revendication précédente dans lequel ladite étape (38) d'activation de deuxièmes contre-mesure comprend une temporisation entre un déclenchement successif desdites deuxièmes contre mesure, une suivante desdites deuxièmes contre-mesure présentant un effet dissuasif supérieur à une précédente desdites deuxième contre-mesure.

9. Procédé selon l'une quelconque des revendications précédentes comprenant une étape de détection de mesures d'évitement, délivrant une information d'évitement, ladite étape (28) d'activation des premières contre mesure prenant en outre en compte ladite information d'évitement, lesdites contre-mesure n'étant pas activées si l'information d'évitement est positive.

10. Système de gestion, destiné à être embarqué dans un véhicule automobile, ledit système de gestion comprenant des éléments matériels et/ou logiciels mettant en oeuvre le procédé d'assistance à la conduite selon l'une quelconque des revendications précédentes.

11. Véhicule automobile comprenant un système de gestion selon la revendication précédente.

12. Produit programme d'ordinateur comprenant des instructions de code de programme enregistrées sur un support lisible par ordinateur pour mettre en oeuvre les étapes du procédé d'assistance à la conduite selon l'une quelconque des revendications 1 à 9, lorsque ledit programme fonctionne sur un ordinateur.

13. Support d'enregistrement de données, lisible par un ordinateur, sur lequel est enregistré un programme d'ordinateur comprenant des instructions de code de programme pour mettre en oeuvre les étapes du procédé d'assistance à la conduite selon l'une quelconque des revendications 1 à 9, lorsque ledit programme fonctionne sur un ordinateur .
